# EUROPÄISCHE PATENTSCHRIFT

(11) **EP 0 732 054 B1**
(45) Veröffentlichungstag und Bekanntmachung des Hinweises auf die Patenterteilung: **06.10.1999**
(21) Anmeldenummer: 96103879.1
(22) Anmeldetag: 12.03.1996
(51) Int. Cl.: A22C 11/00

(54) **Verfahren zum Entfernen der Ümhüllung von Lebensmittelprodukten**
Method for skinning food products
Procédé pour retirer la peau des produits alimentaires

(30) Priorität: 14.03.1995 DE 19509197
(43) Veröffentlichungstag der Anmeldung: 18.09.1996
(73) Patentinhaber: BIFORCE Anstalt, FL-9490 Vaduz (LI)
(72) Erfinder:
(74) Vertreter: Manitz, Finsterwald & Partner

(56) Entgegenhaltungen:
- EP-A- 0 307 194
- EP-A- 0 509 477
- DE-A- 4 331 205
- DE-U- 9 317 428
- US-A- 2 981 971
- US-A- 4 637 095

## Beschreibung

Die Erfindung betrifft ein Verfahren zum Entfernen der Umhüllung von aufzuschneidenden, zumindest im wesentlichen stangen- oder blockförmigen Lebensmittelprodukten, insbesondere zum Enthäuten von Würsten.

Ein derartiges Verfahren ist in der deutschen Patentanmeldung P 43 31 205.5 so wie in der amerikanischen Schrift US-A-4 637 095 beschrieben.

Aufgabe der vorliegenden Erfindung ist es, eine weitere Verbesserung des Verfahrens zum Entfernen der Umhüllung, insbesondere der Entfernung von Wursthäuten zu schaffen, das derart funktionssicher gestaltet ist, daß eine einwandfreie Enthäutung auch bei schwierigen Produkten gewährleistet ist und das Verfahren somit in vollautomatisch arbeitenden Aufschnittlinien eingesetzt werden kann.

Die gestellte Aufgabe wird nach der Erfindung im wesentlichen dadurch gelöst, daß an einem ersten Produktende ein die geschlossene Umhüllung öffnender Doppelschnitt dergestalt durchgeführt wird, daß ein unterhalb der Achsmitte und damit im Regelfall unterhalb des ersten Produktzipfels beginnender und sich unter gleichzeitiger Winkelvergrößerung über die Längsmittelebene des Produkts in die obere Produkthälfte erstreckender Umhüllungszwickel gebildet wird, daß der Doppelschnitt beiderseits des Produkts kontinuierlich weiter und von der oberhalb der Längsmittelebene gelegenen oberen Produkthälfte (8) etwa in die Längsmittelebene zurückgeführt wird und vor dem Erreichen des anderen Produktendes in die untere Produkthälfte ausgelenkt und von dort bis in die Nähe der Achsmitte und damit des zweiten Produktzipfels geführt und in einem vorgebbaren Abstand zum zweiten Produktzipfel beendet wird, wobei die Umhüllung unmittelbar im Nachlauf zur Doppelschnittbildung oder nach Beendigung der Doppelschnittbildung durch eine am ersten Produktzipfel angreifende Einrichtung abgezogen wird.

Wesentlich für die Erfindung ist die besondere Schnittführung längs des zu enthäutenden Produkts, die sicherstellt, daß ein einwandfreies Abziehen der Umhüllung bzw. der Haut auch dann gewährleistet werden kann, wenn sich aufgrund von Trocknungsvorgängen oder aufgrund von Schockfrostung im Bereich der Produktzipfel eine relativ feste Verbindung zwischen der Haut und dem Produkt, insbesondere in den Faltenbereichen, ergeben hat.

Charakteristisch für die Erfindung ist ferner, daß aufgrund der besonderen Schnittführung jegliche Einreißeffekte an der Umhüllung bzw. Wursthaut ausgeschaltet werden können, da beim Abziehen keine störenden, quer zu den Schnittlinien verlaufenden Kräfte auftreten können. Diese Beseitigung der Rißgefahr, insbesondere auch in den kritischen Faltenbereichen, ist entscheidend dafür, daß das Verfahren nach der Erfindung und die zur Durchführung verwendete Vorrichtung die für automatische Linien geforderte Funktions- und Betriebssicherheit erbringen.

Als Vorrichtung zum Abziehen bzw. Aufwickeln der Umhüllung eignet sich insbesondere die in der der deutschen Patentanmeldung P 43 31 205.5 beschriebene Wickelvorrichtung.

Weitere vorteilhafte Merkmale der Erfindung sind in den Unteransprüchen angegeben und werden im Zusammenhang mit den nachfolgenden Erläuterungen eines Ausführungsbeispiels beschrieben.

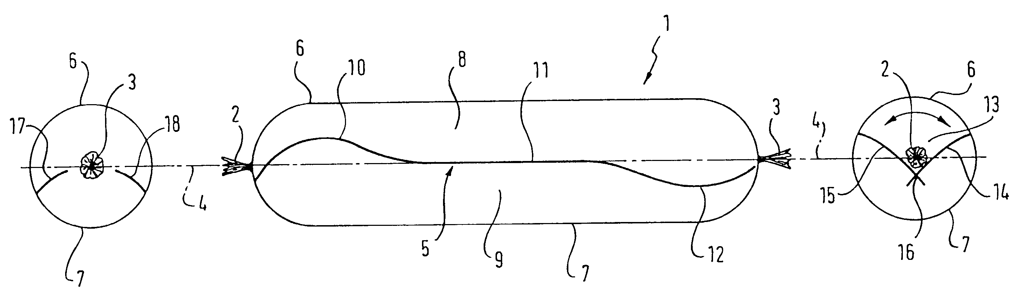

Die Zeichnung zeigt eine Seitenansicht einer zu enthäutenden Wurst sowie die beiden Endansichten, und zwar jeweils mit den gemäß der Erfindung vorgesehenen Schnittlinienverläufen.

Bei dem dargestellten Produkt 1 handelt es sich um eine Wurst, deren Haut an beiden Enden in üblicher Weise zu Produktzipfeln 2, 3 zusammengebunden ist.

Wesentlich für den Erfolg eines automatischen Enthäutungsverfahrens ist, daß die Umhüllung bzw. Haut im Bereich der beiden Produktenden einwandfrei und ohne Abrißeffekte abgezogen werden kann, und zwar auch dann, wenn in diesen Bereichen, wie dies häufig der Fall ist, zwischen der Haut und dem Produkt aufgrund von Trocknungseffekten oder aufgrund von Schockfrostung in den dort stets vorhandenen Faltenbereichen eine relativ starke Verbindung entstanden ist oder die Haut geschwächt worden ist.

Nach der Erfindung werden die Schnittlinien, durch die die Wursthaut ohne Produktbeschädigung in zwei nacheinander abzuziehende Hälften 6, 7 unterteilt wird, so gelegt, daß einerseits ein optimal leichtes Lösen der Haut vom Produkt gewährleistet und andererseits jegliche Rißgefahren ausgeschaltet werden können und somit ein problemfreier Abzug der beiden gebildeten Wursthauthälften in einem kontinuierlichen Abzugsvorgang ermöglicht wird.

Wie die dem Produktzipfel 2 zugeordnete Endansicht zeigt, werden zu Beginn des Enthäutevorganges mittels einer entsprechend ausgebildeten Ritz- oder Hautschneidevorrichtung zwei Öffnungsschnitte 14, 15 gelegt, die sich an einer unterhalb des Produktzipfels 2 gelegenen Stelle 16 schneiden und zur Ausbildung eines Zwickels 13 führen.

Im Bereich der Schnittstelle 16 liegt im Zwickelbereich ein relativ kleiner, beispielsweise etwa 90° betragender Winkel vor, und dieser Winkel erweitert sich - wie dies durch den Doppelpfeil angedeutet ist - zunehmend nach oben hin. Diese Zwickelgestaltung durch die spezielle Schnittführung stellt sicher, daß dann, wenn der Hautabzugsvorgang durch Ergreifen des Zipfels 2 beginnt, zunächst nur ein kleinflächiges Abziehen im Zipfelbereich erforderlich ist. Reiß- bzw. Abrißeffekte, die bei automatischen Linien zu äußerst störenden Betriebsunterbrechungen führen würden, treten aufgrund der Schnittführung nicht auf, da keine entsprechenden Kräfte quer zu den Schnittlinien entstehen können. Mit zunehmendem Abziehen des Zwickelbereichs 13 wird aufgrund der Winkelvergrößerung auch die Fläche größer, von der die Haut abgezogen wird, das heißt man verläßt den kritischen Bereich unmittelbar in Nachbarschaft des Zipfels 2, und man gelangt zu dem Mittelbereich des Produkts, wo das Abziehen der Umhüllung keinerlei Schwierigkeiten bereitet.

Oberhalb der Längsmittelebene 4 des Produkts nimmt der Winkel zwischen den beiden Schnittlinien 14, 15 weiter zu und erreicht nach dem Verlassen des Produktendbereichs den Wert von 180°, das heißt die Schnittlinien 11 liegen etwa in der Längsmittelebene 4 des Produkts und verlaufen bevorzugt als Geradschnitt 11, während in den Produktendbereichen, wo der Winkel kleiner als 180° wird, gekrümmte Schnittlinien 10, 12 vorliegen.

Im weiteren Verlauf der Doppelschnittführung 5 in Richtung des dem Produktzipfel 2 gegenüberliegenden Endes erfolgt wiederum eine Verkleinerung des Winkels zwischen den beiden Schnittlinien, was zur Ausbildung eines gekrümmten Schnittverlaufs 12 in der unteren Produkthälfte analog zu dem am Anfang entstandenen Schnittverlauf in der oberen Produkthälfte 8 führt.

Der Doppelschnitt wird in Richtung des zweiten Produktzipfels 3 fortgeführt, erreicht aber dabei vorzugsweise nicht mehr die Längsmittelebene 4, wie dies in der entsprechenden Stirnansicht zu sehen ist. Die Schnittenden 17, 18 liegen bezüglich des zweiten Produktzipfels 3 beabstandet, so daß zwischen den Schnittenden 17, 18 und dem Produktzipfel 3 ein ausreichend breiter Hautbereich bestehen bleibt, der einen Verbindungsbereich zwischen der oberen Hälfte 6 der Wursthülle und der unteren Hälfte 7 der Wursthülle bildet und es gestattet, die untere Hälfte 7 der Wursthülle kontinuierlich und unterbrechungsfrei im Anschluß an das Abziehen der oberen Hälfte 6 der Wursthülle zu entfernen, da der entsprechende Abzugsvorgang nur weitergeführt werden muß und die untere Hälfte 7 dann von der oberen Hälfte 6 mitgenommen wird und beispielsweise in gleicher Weise aufgewickelt werden kann, wie dies mit der oberen Hälfte schon geschehen ist.

Zur Durchführung des Hautabziehvorgangs wird bevorzugt eine Wickeleinheit nach der Patentanmeldung P 43 31 205.5 verwendet. Eine solche Wickeleinheit weist einen motorisch angetriebenen Greif- und Wickelzylinder auf, der aus zwei exzentrisch zueinander gelagerten und relativ zueinander zwischen zwei Positionen verdrehbaren Teilzylinderschalen besteht, wobei in der einen Position zwischen den beiden Teilzylinderschalen ein die Erfassung des Produktzipfels gewährleistender Öffnungsspalt vorliegt und in der anderen Position der Öffnungsspalt unter Ausbildung einer Produktzipfel-Klemmstelle geschlossen ist.

Die beiden Teilzylinderschalen bestehen aus sich jeweils über einen Bereich von 180° erstreckenden Zylinderschalen, die unterschiedliche Radien aufweisen, wobei die axiale Länge der Teilzylinderschalen ein Mehrfaches des jeweiligen Radius beträgt.

Die einen geringeren Durchmesser aufweisende, innenliegende Zylinderhalbschale ist direkt oder über ein Zwischenstück fest mit einer Motor-Antriebswelle verbunden, und die einen größeren Durchmesser aufweisende Zylinderhalbschale ist fest mit einer eine Antriebswelle umschließenden Hülsenanordnung verbunden. Zwischen der Antriebswelle und der Hülsenanordnung ist eine Einrichtung zur relativen Verdrehung von Welle und Hülsenanordnung vorgesehen, welche zu Beginn der Drehbewegung und bei Drehrichtungsumkehr wirksam ist. Die Einrichtung zur relativen Verdrehung von Welle und Hülsenanordnung besteht aus einem Kniehebelsystem, das über eine Bolzen-Klinkenanordnung zwischen einer abgewinkelten, der Spaltöffnungsstellung der Teilzylinderschalen entsprechenden Position und einer gestreckten Totpunktstelle umsteuerbar ist, in der sich die Teilzylinderschalen in der Klemmstellung befinden. Der mit dem Knickpunkt der Kniehebelanordnung verbundene Bolzen wird bei Drehbeginn des Motors durch eine schwenkbar am Gehäuse der Wickeleinheit gelagerte, unter Federvorspannung stehende Klinke in eine achsnahe Totpunktstellung umgelenkt. Der eine Hebel der Kniehebelanordnung ist dabei schwenkbar über eine drehachsenfeste Scheibe mit der Antriebswelle und der andere Hebel der Kniehebelanordnung schwenkbar mit einer mit der Hülsenanordnung fest verbundenen Scheibe verbunden.

Mit dieser Wickeleinheit kann problemfrei ein Ergreifen und Festklemmen eines Wurstzipfels sowie ein Abziehen der Haut erfolgen. Die Wickeleinheit kann dabei je nach den im Einzelfall vorliegenden Gegebenheiten wickelnd, ziehend und auch wickelnd und ziehend in Funktion sein. Nach Beendigung des Ablösevorgangs kann der Motor in Gegenrichtung angetrieben werden, wodurch die Klemmung des Wurstzipfels aufgehoben wird und ein Abstreifen der aufgewickelten Wursthaut und ein Abwerfen in einen Behälter erfolgen kann.

Die anhand der Zeichnung bereits erläuterte Schnittlinienführung kann entweder getrennt vom eigentlichen Hautabzugsvorgang oder unmittelbar dem Hautabzugsvorgang vorangehend durchgeführt werden, wobei letztere Möglichkeit bevorzugt ist, da die Hautschneide- bzw. Ritzvorrichtung bewegungstechnisch dann mit der Abzugsvorrichtung zusammengefaßt bzw. kombiniert werden kann.

Bei Verwendung der vorstehend erläuterten Wickelvorrichtung wird bevorzugt in der Weise vorgegangen, daß im Nachlauf zur bereits geschilderten Doppelschnittbildung der erste Wurstzipfel erfaßt und festgeklemmt wird, daß dann die Wickelvorrichtung unter Mitnahme des Zwickelbereichs 13 nach oben und dann etwas in Längsrichtung des Produkts 1 parallel zur Produktachse bewegt wird, wobei sich eine Hautschleife ausbildet, die mit der Produktlängsachse einen spitzen Winkel einschließt. Anschließend wird die Wickelvorrichtung in Drehung versetzt und gleichzeitig weiter längs des Produkts unter Mitnahme und Aufwicklung der oberen Hälfte 6 der Wursthaut bewegt. Möglich ist es auch, die Wickelvorrichtung bereits nach Erfassung des Wurstzipfels in Drehbewegung zu versetzen, so daß schon zu Beginn des Verfahrens der Wickelvorrichtung ein Aufwickeln der Wursthaut erfolgt. Die Wickelvorrichtung kann dabei ggf. auch mit unterschiedlichen Geschwindigkeiten in Drehung versetzt werden, um ein optimales Anpassen des Abzugsvorgangs an die jeweils vorliegenden Gegebenheiten zu gewährleisten.

Erreicht die Wickelvorrichtung das andere Produktende, so wird sie unter Fortsetzung der Wickelbewegung nach unten und dann wiederum längs der Unterseite des Produkts 1 bis in eine Stillstandsposition bewegt. In dieser Stillstandsposition wird die Wickelbewegung fortgeführt und gleichzeitig das Produkt 1 mittels einer entsprechenden Schubvorrichtung über die Wickeleinheit hinweg geschoben, wobei während dieses Hinwegschiebens die vom Produkt abgelöste Haut aufgewickelt wird. Am Ende der Schubbewegung ist die Wursthaut völlig vom Produkt entfernt und das enthäutete Produkt befindet sich in einer Auswurf- bzw. Weiterführungsposition.

### Bezugszeichenliste

- 1: Produkt
- 2: erster Produktzipfel
- 3: zweiter Produktzipfel
- 4: Längsmittelebene
- 5: Doppelschnitt
- 6: obere Umhüllungshälfte
- 7: untere Umhüllungshälfte
- 8: obere Produkthälfte
- 9: untere Produkthälfte
- 10: gekrümmter Schnittbereich
- 11: Geradschnittbereich
- 12: gekrümmter Schnittbereich
- 13: Zwickel
- 14: Öffnungsschnitt
- 15: Öffnungsschnitt
- 16: Schnittstelle
- 17: Schnittende
- 18: Schnittende

## Patentansprüche

1. Verfahren zum Entfernen der Umhüllung von aufzuschneidenden, zumindest im wesentlichen stangen- oder blockförmigen Lebensmittelprodukten, insbesondere zum Enthäuten von Würsten,
**dadurch gekennzeichnet,**
daß an einem ersten Produktende (2) ein die geschlossene Umhüllung öffnender Doppelschnitt (14, 15) dergestalt durchgeführt wird, daß ein unterhalb der Achsmitte und damit im Regelfall unterhalb des ersten Produktzipfels (2) beginnender und sich unter gleichzeitiger Winkelvergrößerung über die Längsmittelebene (4) des Produkts (1) in die obere Produkthälfte (8) erstreckender Umhüllungszwickel (13) gebildet wird,
daß der Doppelschnitt beiderseits des Produkts (1) kontinuierlich weiter und von der oberhalb der Längsmittelebene (4) gelegenen oberen Produkthälfte (8) etwa in die Längsmittelebene (4) zurückgeführt wird und vor dem Erreichen des anderen Produktendes in die untere Produkthälfte (9) ausgelenkt und von dort bis in die Nähe der Achsmitte und damit des zweiten Produktzipfels (3) geführt und in einem vorgebbaren Abstand zum zweiten Produktzipfel (3) beendet wird, wobei die Umhüllung (6, 7) unmittelbar im Nachlauf zur Doppelschnittbildung oder nach Beendigung der Doppelschnittbildung durch eine am ersten Produktzipfel (2) angreifende Einrichtung abgezogen wird.

2. Verfahren nach Anspruch 1,
**dadurch gekennzeichnet,**
daß sich die Öffnungsschnitte (14, 15) im Bereich des ersten Produktzipfels (2) an der Schnittstelle (16) unter einem spitzen Winkel, insbesondere unter einem Winkel von etwa 90° treffen.

3. Verfahren nach Anspruch 1 oder 2,
**dadurch gekennzeichnet,**
daß die Schnittenden (17, 18) im Bereich des zweiten Produktzipfels (3) in der gleichen Produkthälfte gelegen sind wie die Schnittstelle (16) am gegenüberliegenden Produktende.

4. Verfahren nach einem der vorhergehenden Ansprüche,
**dadurch gekennzeichnet,**
daß nach der durch die Öffnungsschnitte (14, 15) bewirkten Bildung des Zwickels (13) der zugehörige erste Produktzipfel (12) mittels einer gleichzeitig als Klemmvorrichtung ausgebildeten Wickelvorrichtung ergriffen wird,
daß diese Wickelvorrichtung, deren Wickelachse senkrecht zur Produktlängsachse verläuft, zunächst unter Mitnahme des Zwickels (3) mit oder ohne Rotation nach oben und dann längs des Produkts (1) in Richtung des gegenüberliegenden Produktendes unter Aufwicklung der abgezogenen Umhüllung bewegt wird, daß dann die Wickelvorrichtung bei Erreichen des anderen Produktendes unter Fortsetzung der Wickelbewegung nach unten bewegt und dabei unter Einwicklung des zweiten Wurstzipfels (3) die untere Umhüllungshälfte (7) mitgenommen und aufgewickelt wird.

5. Verfahren nach Anspruch 4,
**dadurch gekennzeichnet,**
daß nach der Bildung des Zwickels (13) die Wickelvorrichtung, mit der der zugehörige Produktzipfel (12) ergriffen wurde, mit oder ohne Rotation nach oben und dann längs des Produkts (1) in Richtung des gegenüberliegenden Produktendes solange bewegt wird, bis die ergriffene obere Umhüllungshälfte (6) eine Schleife bildet und diese obere Umhüllungshälfte (6) mit der Produktlängsachse einen spitzen Winkel einschließt, worauf dann die Wickelvorrichtung in Drehung versetzt oder weiter gedreht und längs des Produkts (1) zum gegenüberliegenden Ende bewegt wird.

6. Verfahren nach Anspruch 4 oder 5,
**dadurch gekennzeichnet,**
daß die Wickelvorrichtung nach Erreichen einer unterhalb des Produkts (1) gelegenen Position unter Beibehaltung der Wickelbewegung stationär gehalten und das Produkt (1) mittels einer entsprechenden Betätigungsvorrichtung über der Wickelvorrichtung vorbei in eine Auswurfposition geschoben wird, wobei während dieser Schiebebewegung die untere Umhüllungshälfte (7) aufgewickelt und vollständig vom Produkt (1) entfernt wird.

## Claims

1. Method of removing the sleeve from at least substantially bar or block-like food products which are to be cut up, in particular for the skinning of sausage, characterized in that a double cut (14, 15) is executed at a first product end (2) to open the closed sleeve in such a way that a sleeve wedge (13) is formed which starts beneath the middle of the axis and thus in general below the first tip (2) of the product and extends with a simultaneous increase of the angle past the central longitudinal plane (4) of the product (1) into the upper product half (8); in that the double cut on both sides of the product (1) is continuously guided further and returned from the upper product half (8) disposed above the longitudinal central plane (4) approximately back into the longitudinal central plane (4) and is deflected prior to reaching the other product end into the lower product half (9) and guided from there up to and into the vicinity of the central axis and thus into the vicinity of the second product tip (3) and terminates at a predeterminable distance from the second product tip (3), with the sleeve (6, 7) being withdrawn directly following the double cut formation or after termination of the double cut formation by a device which acts at the first product tip (2).

2. Method in accordance with claim 1, characterized in that the opening cuts (14, 15) in the region of the first product tip (2) meet at the intersection position (16) at an acute angle, in particular at an angle of approximately 90°.

3. Method in accordance with claim 1 or claim 2, characterized in that the cut ends (17, 18) in the region of the second product tip (3) are disposed in the same product half as the point of intersection (16) at the oppositely disposed product end.

4. Method in accordance with one of the preceding claims, characterized in that, after the formation of the wedge brought about by the opening cuts (14, 15), the first associated first product tip (12) is grasped by means of a winding device, which is simultaneously formed as a clamping device; in that this winding device, the winding axis of which extends perpendicular to the longitudinal axis of the product, is first moved with or without rotation while taking the wedge (3) with it, upwardly and then along the product (1) in the direction of the oppositely disposed product end while winding up the drawn off sleeve, in that the winding up device, on reaching the other product end, moves downwardly while continuing the winding movement and in doing so takes with it and winds up the lower half (7) of the sleeve while wrapping the second sausage tip (3).

5. Method in accordance with claim 4, characterized in that, after the formation of the wedge (13), the winding device, with which the associated product tip (12) was grasped, is moved with or without rotation upwardly and then along the product (1) in the direction of the oppositely disposed product end until the grasped upper sleeve half (6) forms a loop and this upper sleeve half (6) includes an acute angle with the longitudinal axis of the product, whereupon then the winding device is set rotating or rotates further and moves along the product (1) to the opposite end.

6. Method in accordance with claim 4 or claim 5, characterized in that the winding device, after reaching a position disposed beneath the product (1) is held stationary while retaining the winding movement and the product (1) is pushed by means of a corresponding actuating device past the winding device into an ejection position, with the lower sleeve half (7) being wound up and fully removed from the product (1) during this displacement.

## Revendications

1. Procédé pour retirer la peau de produits alimentaires à découper, au moins sensiblement en forme de barres ou de blocs, en particulier pour retirer la peau de saucisse ou saucisson,
caractérisé par les opérations suivantes :
on procède à une première extrémité du produit (2) à une entaille double (14, 15) qui ouvre la peau fermée de telle manière qu'il se forme un coin de peau (13) qui commence au-dessous de l'axe médian et ainsi en règle générale au-dessous de la première extrémité du produit (2) et s'étend au-dessus du plan médian longitudinal (4) du produit (1) jusque dans la moitié supérieure (8) du produit avec augmentation angulaire simultanée,
on poursuit l'entaille double des deux côtés du produit (1) en continu et on la ramène depuis la moitié de produit supérieure (8) au-dessus du plan médian longitudinal (4) approximativement jusque dans le plan médian longitudinal (4), et on la dévie avant d'atteindre l'autre extrémité du produit jusque dans la moitié inférieure (9) du produit, et de cet endroit on la mène jusqu'à proximité de l'axe médian et ainsi de la deuxième extrémité (3) du produit et on la termine à une distance prédéterminée de ladite deuxième extrémité du produit (3),
la peau (6, 7) étant retirée immédiatement à la suite de la formation de l'entaille double, ou bien après terminaison de la formation de l'entaille double, au moyen d'un dispositif qui attaque au niveau de la première extrémité du produit (2).

2. Procédé selon la revendication 1,
caractérisé en ce que
les entailles d'ouverture (14, 15) se rencontrent dans la région de la première extrémité du produit (2) au niveau de l'emplacement d'entaille (16) sous un angle aigu, en particulier sous un angle d'environ 90°.

3. Procédé selon l'une ou l'autre des revendications 1 et 2,
caractérisé en ce que
les extrémités d'entaille (17, 18) dans la région de la deuxième extrémité (3) du produit sont situées dans la même moitié du produit que l'emplacement d'entaille (16) à l'extrémité opposée du produit.

4. Procédé selon l'une des revendications précédentes,
caractérisé en ce que
après formation du coin (13) réalisée par les entailles d'ouverture (14, 15), la première extrémité associée (12) du produit est saisie au moyen d'un dispositif d'enroulement, réalisé simultanément sous forme de dispositif à pince, en ce que ce dispositif d'enroulement, dont l'axe d'enroulement s'étend perpendiculairement à l'axe longitudinal du produit, est tout d'abord déplacé tout en enroulant la peau retirée, tout d'abord en entraînant le coin (3) avec ou sans rotation vers le haut, puis le long du produit (1) en direction de l'extrémité opposée du produit, en ce que le dispositif d'enroulement est alors déplacé vers le bas lorsqu'il atteint l'autre extrémité du produit en poursuivant le mouvement d'enroulement, et en ce qu'alors la moitié inférieure de la peau (7) est conjointement entraînée et enroulée lors de l'enroulement de la deuxième extrémité du produit (3).

5. Procédé selon la revendication 4,
caractérisé en ce que
après formation du coin (13), le dispositif d'enroulement avec lequel l'extrémité associée du produit (12) a été saisie, est déplacé avec ou sans rotation vers le haut puis le long du produit (1) en direction de l'extrémité opposée, aussi longtemps que la moitié de peau supérieure saisie (6) forme une boucle, et cette moitié de peau supérieure (6) forme avec l'axe longitudinal du produit un angle aigu, suite à quoi le dispositif d'enroulement est mis en rotation, ou conservé en rotation, et déplacé le long du produit (1) jusqu'à l'extrémité opposée.

6. Procédé selon l'une ou l'autre des revendications 4 et 5,
caractérisé en ce que
après avoir atteint une position située au-dessous du produit (1), le dispositif d'enroulement est maintenu stationnaire en poursuivant le mouvement d'enroulement, et le produit (1) est mis en translation, au moyen d'un dispositif d'actionnement correspondant et en passant devant le dispositif d'enroulement, jusque dans une position d'éjection, et pendant ce mouvement de translation la moitié inférieure de la peau (7) est enroulée et entièrement retirée du produit (1).
